# EUROPÄISCHE PATENTSCHRIFT

(11) **EP 1 841 980 B1**
(45) Veröffentlichungstag und Bekanntmachung des Hinweises auf die Patenterteilung: **02.01.2013**
(21) Anmeldenummer: 06703598.0
(22) Anmeldetag: 18.01.2006
(51) Int. Cl.: F16D 65/092, F16D 65/097, F16D 55/02

(54) **TEILBELAG-SCHEIBENBREMSE**
PARTIALLY LINED DISK BRAKE
FREIN A DISQUE A GARNITURE PARTIELLE

(30) Priorität: 18.01.2005 DE 102005002414; 30.09.2005 DE 102005046804
(43) Veröffentlichungstag der Anmeldung: 10.10.2007
(73) Patentinhaber: Continental Teves AG & Co. oHG, 60488 Frankfurt am Main (DE)
(72) Erfinder: REUTER, Manfred, 35789 Weilmünster (DE); BALZ, Jürgen, 65510 Hünstetten-Oberlibbach (DE); PETRI, Ralph, 65843 Sulzbach/Ts. (DE); SALZMANN, Sebastian, 63477 Maintal (DE); ESER, Dirk, 65812 Bad Soden (DE)
(86) Internationale Anmeldenummer: PCT/EP2006/050287
(87) Internationale Veröffentlichungsnummer: WO 2006/077227

(56) Entgegenhaltungen:
- EP-A- 0 072 192
- DE-A1- 3 227 195

## Beschreibung

Die Erfindung betrifft eine Teilbelag-Scheibenbremse, insbesondere für ein Kraftfahrzeug, mit einem Gehäuse, das eine Gehäusebrücke, einen ersten, eine Betätigungseinheit aufweisenden Gehäuseschenkel und einen zweiten, äußeren Gehäuseschenkel umfasst. Dabei ist an den Innenseiten der Gehäuseschenkel je eine Bremsbacke mit Bremsbelag und Rückenplatte angebracht, die eine Bremsscheibe beaufschlagen. Das Gehäuse und die Bremsbacken sind auf einem fahrzeugfesten Halter in Richtung einer Bewegungsachse der Betätigungseinheit verschiebbar gelagert. Weiterhin ist an der Seite der Betätigungseinheit zwischen einer Anlagefläche in der Gehäusebrücke und der Bremsbacke eine Niederhaltefeder vorgesehen, welche die Bremsbacke gegenüber dem Halter und der Anlagefläche vorspannt, um ein Rattern der Bremsbacke auf dem Halter zu verhindern.

In der DE 25 58 141 A1, vgl. Oberbegriff des Anspruchs 1, wird eine entsprechende Teilbelag-Scheibenbremse offenbart, die als Betätigungseinheit eine Kolben-Zylindereinheit aufweist. Bei Betätigung der Bremse bewegt sich der Kolben aus dem Zylinder heraus und drückt die kolbenseitige Bremsbacke an die Bremsscheibe bis diese dort anliegt. Nun schiebt sich die Kolben-Zylindereinheit bzw. der kolbenseitige Gehäuseschenkel von der Bremsscheibe weg und zieht den gegenüberliegenden Gehäuseschenkel in Richtung der dortigen Scheibenseite. Dadurch wird auch die andere Bremsbacke an die Bremsscheibe gepresst und beide Bremsbacken üben eine Normalkraft auf die Bremsscheibe aus. Wird die Bremse gelöst, so herrscht in der Kolben-Zylindereinheit kein Hydraulik-Druck und die Bremsbacken üben keine Normalkraft mehr auf die Bremsscheibe aus. Jedoch liegen sie immer noch an der Bremsscheibe an und erzeugen reibungsbedingt ein restliches Bremsmoment, das sog. Restmoment. Zudem sind die Beläge verstärkt thermisch belastet, da sich kein Luftstrom zwischen Belag und Scheibe einstellt und Belag und Scheibe thermisch nicht entkoppelt sind. Der EP 0 072 192 A1 ist eine Teilbelag-Scheibenbremse mit einem Bremsbelag und mit einer nicht spezifizierten Anlage für eine Feder entnehmbar.

Ausgehend davon ist es eine Aufgabe der Erfindung eine Teilbelag-Scheibenbremse mit Niederhaltefeder anzugeben, die ein verbessertes Lüftverhalten der Bremsbacken aufweist, d.h. dass das Restmoment verringert wird und weiter Belag und Scheibe thermisch entkoppelt werden.

Erfindungsgemäß wird die Aufgabe dadurch gelöst, dass die Anlagefläche der Niederhaltefeder in der Gehäusebrücke antiparallel zu der Bewegungsachse angeordnet ist, entlang derer sich das bewegbare Bauteil der Betätigungseinheit bewegt, und dass zwischen der Anlagefläche und der Bewegungsachse ein Winkel α größer 0° vorgesehen ist, wobei der Winkel α in einer Ebene liegt, die von der Bewegungsachse und von einem Kraftvektor der resultierenden Federkraft F_{F} aufgespannt wird, so dass eine Rückzugbewegung der Bremsbacke und des Bauteils von der Bremsscheibe weg unterstützt wird. Somit ergibt sich nicht nur eine radiale Vorspannkraft, die die Bremsbacke auf den Halter presst, sondern auch eine dazu senkrechte Kraftkomponente. Dadurch wird die Rückzugsbewegung der Bremsbacke und des bewegenden Bauteils der Betätigungseinheit von der Bremsscheibe weg unterstützt und somit das Lüftverhalten verbessert, da sich zwischen Bremsbacke und Bremsscheibe ein kleiner Luftspalt einstellt. Dadurch ist vorgesehen, dass die Feder zusätzlich zu der radialen Vorspannkraft F_{R} eine zur Bewegungsachse parallele, axiale Kraftkomponente Fₓ erzeugt, die den Kolben und die kolbenseitige Bremsbacke zurück in die Ausgangslage schiebt und somit den Lüftvorgang verbessert.

Es hat sich gezeigt, dass die zur Bewegungsachse parallele Kraftkomponente Fₓ besonders effektiv bzgl. des Lüftverhaltens wirkt, wenn der Winkel α größer als etwa 1,5° misst.

In einer besonders vorteilhaften Ausgestaltung der Erfindung beschränkt sich der Winkel α auf einen Bereich von etwa 1,5° bis 11°. Wenn der Winkel α größer als 11° ist, dann nimmt die radiale Vorspannkraft F_{R} der Bremsbacke zu Gunsten der zur Bewegungsachse parallelen Kraftkomponente Fₓ so stark ab, dass sich daraus kein günstiges Betriebsverhalten ergibt.

Aufgrund der Materialpaarung von Niederhaltefeder und Gehäusebrücke und wegen der Umgebungsbedingungen bei der Anwendung ist der Kontaktbereich zwischen Niederhaltefeder und Anlagefläche starker Korrosion ausgesetzt. Deshalb erweist es sich als besonders günstig, wenn zwischen der Niederhaltefeder und Anlagefläche in der Gehäusebrücke mindestens eine kleine, punktähnliche Kontaktfläche vorgesehen wird, um das Korrosionselement möglichst klein zu halten und dadurch Korrosion zu reduzieren.

Um eine günstige Herstellung der beschriebenen Scheibenbremse zu ermöglichen, sind Anlagefläche und Gehäusebrücke einstückig ausgeführt. Dadurch, dass Anlagefläche und Gehäusebrücke in einem Gießvorgang erzeugt werden, entstehen keine zusätzlichen Fertigungskosten.

In einer weiteren vorteilhaften Ausführung der Erfindung sind Anlagefläche und Gehäusebrücke mehrstückig ausgeführt. So kann gewährleistet werden, dass bei geeigneter Werkstoffauswahl Verschleiß und/oder Korrosion der Anlagefläche und Feder verlangsamt werden, indem entweder besonders harte und/oder korrosionshemmende Werkstoffe verwendet werden.

Weiterhin ergeben sich bzgl. der Herstellungskosten Vorteile, wenn als Niederhaltefeder Draht- oder Blattfedern verwendet werden, da diese aufgrund der einfachen Bauweise in großen Stückzahlen zu günstigen Konditionen bezogen werden können.

Besonders bei der Verwendung von hydraulischen oder elektromechanischen Betätigungseinheiten werden weitere Vorteile der Erfindung deutlich. Da bei einer hydraulischen Betätigungseinheit nur meist eine aktive Bewegungsrichtung möglich ist, fehlt eine hydraulische Rückzugskraft für Kolben und Bremsbacke vollständig, wodurch der axialen, zurückziehend wirkenden Kraftkomponente Fₓ der Federkraft F_{F} eine entscheidende Bedeutung bzgl. der Funktionalität der Bremse zukommt. Bei elektromechanischer Betätigung wird die Kraftkomponente Fₓ besonders notwendig, falls die Betätigungseinheit ausfällt und dann die Bremsbacke nicht mehr zurückziehen kann.

Weitere Einzelheiten der Erfindung gehen aus der Zeichnung anhand der Beschreibung hervor.

In der Zeichnung zeigt
- Fig. 1: eine erste Ausführungsform der Erfindung in einem Schnitt durch eine Teilbelag-Scheibenbremse entlang der Linie II-II,
- Fig. 2: eine weiter Ansicht der o. g. Ausführungsform entlang der Schnittlinie I-I und
- Fig. 3: eine perspektivische Ansicht einer TeilbelagScheibenbremse gemäß einer weiteren Ausführungsform, in der die Anlageflächen als Anbauteile ausgeführt sind.

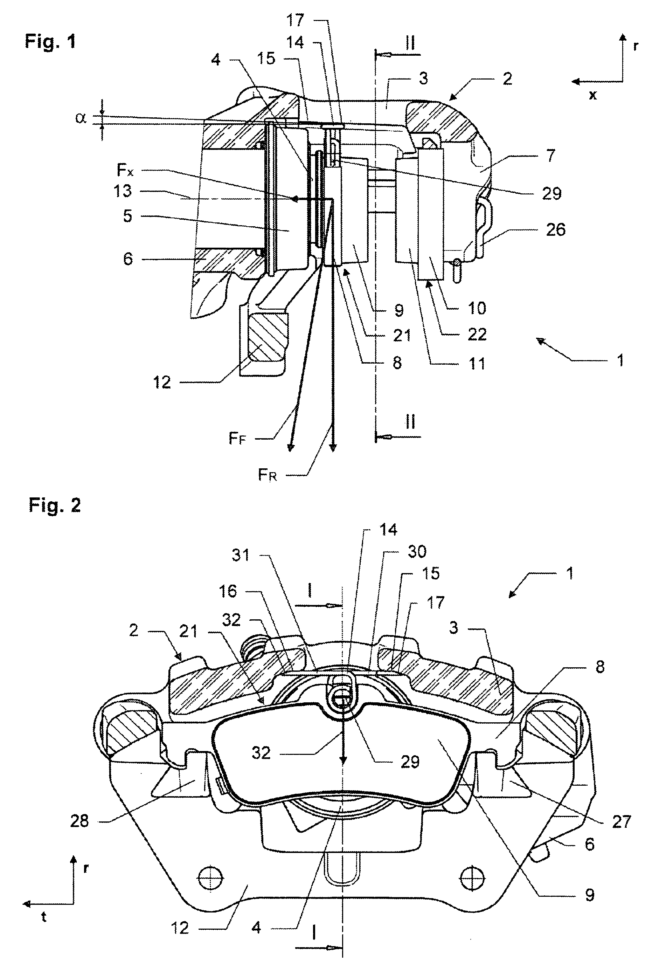

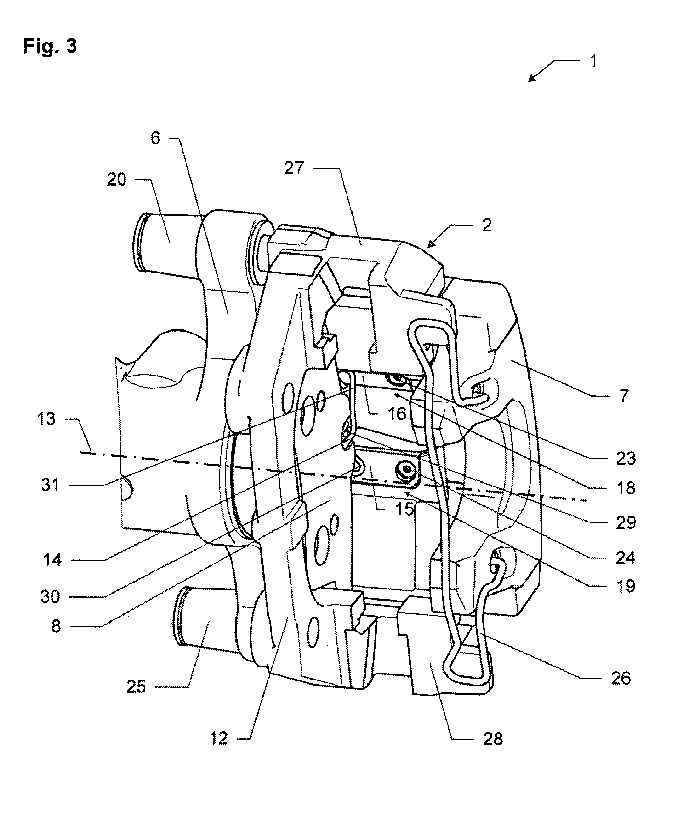

Figur 1 und 2 stellen eine erste Ausführungsform einer Teilbelag-Scheibenbremse 1 in zwei Schnitten dar. Die Teilbelag-Scheibenbremse 1 umfasst ein Gehäuse 2, welches sich aus einem ersten Gehäuseschenkel 6, einer Gehäusebrücke 3 und einem zweiten, fahrzeugbezogen äußeren Gehäuseschenkel 7 zusammensetzt. In dieser Ausführungsform ist in dem ersten Gehäuseschenkel 6 eine Kolben-Zylindereinheit 4,5 vorgesehen, wobei an dem Kolben 4 eine Rückenplatte 8 einer Bremsbacke 21 mit Bremsbelag 9 anliegt und dort fixiert ist. Am äußeren Gehäuseschenkel 7 ist eine weitere Bremsbacke 22 mit Rückenplatte 10 und Bremsbelag 11 vorgesehen. Die Bremsbacken 21,22 beaufschlagen Teile einer nicht dargestellten Bremsscheibe. Gehäuse 2 und Bremsbacken 21,22 bzw. deren Rückenplatten 8,10 sind an zwei Armen 27,28 eines Halters 12 parallel zur Bewegungsachse 13 der Kolben-Zylindereinheit 4,5 verschiebbar gelagert. Dabei sitzt das Gehäuse 2 mit dem kolbenseitigen Gehäuseschenkel 6 auf zwei im Halter 12 eingeschraubten Bolzen 20,25. Eine Feder 26 zieht den äußeren Gehäuseschenkel 7 auf die Arme 27,28 des Halters (Fig. 3), wodurch die Bremsbacke 22 zwischen den Armen 27,28 des Halters 12 und der Gehäusebrücke 3 verspannt wird. Analog dazu stützt sich die Bremsbacke 21 mit der Rückenplatte 8 auch auf den Arme 27,28 des Halters 12 verschiebbar ab. Um Rattern zu vermeiden wird die Verspannung der Bremsbacke 21 zwischen den Armen 27,28 und der Gehäusebrücke 3 von der Niederhaltefeder 14 aufgebracht. Diese ist in diesem Ausführungsbeispiel in einer Aufnahme 29 auf der Rückenplatte 8 der Bremsbacke 21 fixiert und drückt mit zwei Federarmen 30,31 gegen zwei Anlageflächen 15,16. Dabei wird nur punktähnlicher Kontakt 17,32 zwischen den Federarmen 30,31 und Anlageflächen 15,16 hergestellt, um das entstehende Korrosionselement möglicht klein zu halten. Die Anlageflächen 15,16 sind gegenüber der Bewegungsachse 13 der Kolben-Zylindereinheit 4,5 in einem Winkel α schräg gestellt, wobei der Winkel α in einer von der Bewegungsachse 13 und von einem Kraftvektor der resultierenden Federkraft F_{F} an der Aufnahme aufgespannten Ebene liegt. Dadurch ergibt sich aus der Federkraft F_{F} sowohl eine radiale Vorspannkraft F_{R}, die senkrecht auf die Arme 27,28 des Halters 12 wirkt. Zudem ergibt sich eine axiale, zur Bewegungsachse 13 parallele Kraftkomponente Fₓ, die gegen den Kolben 4 und die Bremsbacke 21 wirkt. Anzumerken ist, dass der Halter 12 auch direkt an der Radaufhängung bzw. am Federbein eines Fahrzeugs vorgesehen ist und mit dieser ein Bauteil bildet.

Denkbar sind auch Ausführungsformen, bei denen nur eine oder auch mehrere Anlageflächen in der Gehäusebrücke 3 vorgesehen sind. Dementsprechend muss dann auch die Niederhaltefeder gestaltet sein, so dass diese im Zusammenspiel mit einer oder mehreren Anlageflächen eine zur Bewegungsachse 13 der Kolben-Zylindereinheit 4,5 parallele, axiale Kraftkomponente Fₓ der Federkraft F_{F} ausbildet. Entscheidend bei der Gestaltung einer oder mehrerer Anlageflächen ist ausschließlich, dass diese in einem bestimmten Winkel α gegenüber der Bewegungsachse 13 geneigt sind und somit als axiale Gleitschräge(n) fungieren, wobei der Winkel α in einer Ebene liegt, die von der Bewegungsachse 13 und von einem Kraftvektor der resultierenden Federkraft F_{F} aufgespannt wird.

Figur 3 zeigt eine Teilbelag-Scheibenbremse 1 gemäß einer weiteren Ausführungsform in einer perspektivischen Ansicht, bei der die Anlageflächen 15,16 als Anbauteile 18,19 realisiert sind. Zur besseren Sicht auf die Anordnung sind außer der kolbenseitigen Rückenplatte 8 beide Bremsbacken nicht dargestellt. So wird ersichtlich, in welcher Weise das Gehäuse 2 mit dem Gehäuseschenkel 6 auf dem Halter 12 über die Bolzen 20 und 25 verschiebbar befestigt ist und die Bremsbacken zwischen den Anlageflächen 15,16 der Gehäusebrücke 3 und den Armen 27,28 des Halters 12 verspannt werden. Dabei ist in Figur 3 repräsentativ für die gesamte Bremsbacke 21 nur die Rückenplatte 8 dargestellt, die auf den Armen 27,28 aufliegt. An der Aufnahme 29 der Rückenplatte 8 ist die Feder 14 fixiert, welche mit den beiden Federarmen 30,31 die Rückenplatte 8 gegenüber den Anlageflächen 15,16 bzw. den Anbauteile 18,19 abstützt und mit den Armen 27,28 des Halters 12 verspannt. Die Anbauteile 18,19 werden mittels Schrauben 23,24 mit der Gehäusebrücke verschraubt. Möglich sind jedoch auch andere Fixierungsmaßnahmen, wie form-, reib-, materialschlüssige oder sonstige Verbindungen, ohne dass dabei die Erfindung verlassen wird. Relevant ist hierbei nur, dass die Anlageflächen von gesonderten Bauteilen gebildet werden, die im Zusammenspiel mit der Niederhaltefeder 14 eine axiale Kraftkomponente Fₓ hervorrufen.

Die Funktion der Teilbelagscheibenbremse 1 ist wie folgt. Zwischen dem Gehäuse 2 und dem Halter 12 sind die Bremsbacken 21,22 angeordnet, wobei eine Niederhaltefeder 14 die kolbenseitige Bremsbacke 21 gegenüber den Anlageflächen 15,16 vorspannt und zur Vermeidung von Rattern auf die Arme 27,28 des Halters 12 presst. Aufgrund des Winkels α der Anlagefläche 15,16 ergibt sich aus der Federkraft F_{F} der Niederhaltefeder 14 zur der radialen Vorspannkraft F_{R} eine axiale, zur Bewegungsachse 13 parallele Kraftkomponente Fₓ. Wird die Bremse betätigt, so baut sich in der Kolben-Zylindereinheit 4,5 ein hydraulischer Druck auf und schiebt den Kolben 4 aus dem Zylinder 5 heraus. Dadurch bewegt sich die Bremsbacke 21 an die Bremsscheibe bis ihr Belag 9 daran anliegt. Aufgrund dessen schiebt sich nun die Kolben-Zylindereinheit 4,5 bzw. der kolbenseitige Gehäuseschenkel 6 von der Bremsscheibe weg und zieht über die Gehäusebrücke 3 den gegenüberliegenden Gehäuseschenkel 7 in Richtung der dortigen Bremsscheibenseite. Dadurch wird auch die andere Bremsbacke 22 an die Bremsscheibe gepresst und beide Bremsbacken 21,22 üben eine Normalkraft auf Teile der Laufflächen der Bremsscheibe aus. Wird die Bremse gelöst, so liegt kein Druck mehr in der Kolben-Zylindereinheit 4,5 an und die zur Bewegungsachse 13 parallele, axiale Komponente Fₓ der Federkraft F_{F} schiebt Kolben 4 und Bremsbacke 21 von der Bremsscheibe weg in ihre Ausgangsposition. So wird sichergestellt, dass die Bremsbacke 21 nach dem Bremsvorgang nicht mehr an der Bremsscheibe schleift und ein ungünstiges, bremsendes Restmoment vermieden wird. Somit ist das Lüftverhalten der Bremse entscheidend verbessert.

### Bezugszeichenliste

- 1: Teilbelag-Scheibenbremse
- 2: Gehäuse
- 3: Gehäusebrücke
- 4: Kolben
- 5: Zylinder
- 6: erster, innerer Gehäuseschenkel
- 7: zweiter, äußerer Gehäuseschenkel
- 8: Rückenplatte
- 9: Bremsbelag
- 10: Rückenplatte
- 11: Bremsbelag
- 12: Halter
- 13: Bewegungsachse
- 14: Niederhaltefeder
- 15: Anlagefläche
- 16: Anlagefläche
- 17: punktähnliche Kontaktfläche
- 18: Anbauteil
- 19: Anbauteil
- 20: Bolzen
- 21: Bremsbacke
- 22: Bremsbacke
- 23: Schraube
- 24: Schraube
- 25: Bolzen
- 26: Feder
- 27: Arm des Halters 12
- 28: Arm des Halters 12
- 29: Aufnahme
- 30: Federarm
- 31: Federarm
- 32: punktähnliche Kontaktfläche
- α: Winkel
- F_{F}: resultierende Federkraft an der Aufnahme 29
- F_{R}: radiale Vorspannkraft
- Fₓ: axiale Komponente der Federkraft F_{F}

## Patentansprüche

1. Teilbelag-Scheibenbremse (1) mit einem Gehäuse (2), einer Gehäusebrücke (3), mit wenigstens einem Gehäuseschenkel (6), der eine Betätigungseinheit (4,5), umfassend eine Aktuatoreinheit (5) und ein entlang einer Bewegungsachse (13) bewegbares Bauteil (4), aufweist, mit mindestens einer Bremsbacke (21), die an dem Bauteil (4) angeordnet und an mindestens einer Abstützung (27,28) verschiebbar gelagert ist, mit einer Niederhaltefeder (14), welche zwischen der Bremsbacke (21) und mindestens einer Anlagefläche (15,16) in der Gehäusebrücke (3) eine Vorspannkraft F_{R} erzeugt und so die Bremsbacke (21) mit der Abstützung (27,28) verspannt, **dadurch gekennzeichnet, dass** die Anlagefläche (15,16) der Niederhaltefeder (14) zur Bewegungsachse (13) antiparallel angeordnet ist, und ein Winkel α zwischen der Anlagefläche (15,16) und der Bewegungsachse (13) größer als 0° ist, wobei der Winkel α in einer von der Bewegungsachse (13) und von einem Kraftvektor der resultierenden Federkraft F_{F} aufgespannten Ebene liegt, so dass eine Rückzugbewegung der Bremsbacke (21) und des Bauteils (4) von der Bremsscheibe weg unterstützt wird.

2. Teilbelag-Scheibenbremse nach Anspruch 1, **dadurch gekennzeichnet, dass** der Winkel α größer als etwa 1,5° ist.

3. Teilbelag-Scheibenbremse nach Anspruch 1 bis 2 **dadurch gekennzeichnet, dass** der Winkel α etwa 1,5° bis 11° beträgt.

4. Teilbelag-Scheibenbremse nach Anspruch 1 **dadurch gekennzeichnet, dass** wenigstens eine Kontaktfläche (17,32) zwischen der Niederhaltefeder (14) und Anlagefläche (15,16) in der Gehäusebrücke (3) eine punktähnliche Form aufweist.

5. Teilbelag-Scheibenbremse nach Anspruch 1 **dadurch gekennzeichnet, dass** die Anlagefläche (15,16) und Gehäusebrücke (3) einstückig ausgeführt sind.

6. Teilbelag-Scheibenbremse nach Anspruch 1 **dadurch gekennzeichnet, dass** die Anlagefläche (15,16) und Gehäusebrücke (3) mehrstückig ausgeführt sind und die Anlagefläche (15,16) von mindestens einem Anbauteil (18,19) gebildet wird.

7. Teilbelag-Scheibenbremse nach Anspruch 1 **dadurch gekennzeichnet, dass** die Niederhaltefeder (14) als eine Draht- oder Blattfeder ausgebildet ist.

8. Teilbelag-Scheibenbremse nach Anspruch 1 **dadurch gekennzeichnet, dass** die Betätigungseinheit (4,5) hauptsächlich auf einem hydraulischen oder elektromechanischen Funktionsprinzip basiert.

## Claims

1. Partially lined disc brake (1) with a housing (2), with a housing bridge (3), with at least one housing leg (6) which has an actuation unit (4, 5) comprising an actuator unit (5) and a component (4) which is movable along a movement axis (13), with at least one brake shoe (21) which is arranged on the component (4) and is mounted displaceably on at least one support (27, 28), with a holding-down spring (14) which generates a prestressing force F_{R} in the housing bridge (3) between the brake shoe (21) and at least one bearing face (15, 16) and thus braces the brake shoe (21) with the support (27, 28), **characterized in that** the bearing face (15, 16) of the holding-down spring (14) is arranged anti-parallel to the movement axis (13), and an angle α between the bearing face (15, 16) and the movement axis (13) is greater than 0°, the angle α lying in a plane spanned by the movement axis (13) and by a force vector of the resultant spring force F_{F}, so that a retraction movement of the brake shoe (21) and of the component (4) away from the brake disc is assisted.

2. Partially lined disc brake according to Claim 1, **characterized in that** the angle α is greater than about 1.5°.

3. Partially lined disc brake according to Claims 1 and 2, **characterized in that** the angle α amounts to about 1.5° to 11°.

4. Partially lined disc brake according to Claim 1, **characterized in that** at least one contact face (17, 32) between the holding-down spring (14) and the bearing face (15, 16) in the housing bridge (3) has a punctiform shape.

5. Partially lined disc brake according to Claim 1, **characterized in that** the bearing face (15, 16) and the housing bridge (3) are produced in one piece.

6. Partially lined disc brake according to Claim 1, **characterized in that** the bearing face (15, 16) and the housing bridge (3) are of multi-piece form and the bearing face (15, 16) is formed by at least one mounted part (18, 19).

7. Partially lined disc brake according to Claim 1, **characterized in that** the holding-down spring (14) is designed as a wire spring or leaf spring.

8. Partially lined disc brake according to Claim 1, **characterized in that** the actuation unit (4, 5) is based mainly on a hydraulic or electromechanical operating principle.

## Revendications

1. Frein à disque à garniture partielle (1) comprenant un boîtier (2), un pont de boîtier (3), avec au moins une branche de boîtier (6) qui présente une unité d'actionnement (4, 5) comprenant une unité d'actionnement (5) et un composant (4) déplaçable le long d'un axe de déplacement (13), au moins une mâchoire de frein (21) qui est disposée sur le composant (4) et qui est supportée de manière déplaçable sur au moins un support (27, 28), un ressort de maintien vers le bas (14) qui produit entre la mâchoire de frein (21) et au moins une surface d'appui (15, 16) dans le pont de boîtier (3) une force de précontrainte F_{R} et qui serre ainsi la mâchoire de frein (21) avec le support (27, 28), **caractérisé en ce que** la surface d'appui (15, 16) du ressort de maintien vers le bas (14) est disposée de manière antiparallèle par rapport à l'axe de déplacement (13), et un angle α entre la surface d'appui (15, 16) et l'axe de déplacement (13) est supérieur à 0°, l'angle α se situant dans un plan tendu par l'axe de déplacement (13) et un vecteur de force de la force de ressort résultante F_{F} de telle sorte qu'un mouvement de retour de la mâchoire de frein (21) et du composant (4) depuis le disque de frein soit supporté.

2. Frein à disque à garniture partielle selon la revendication 1, **caractérisé en ce que** l'angle α est supérieur à environ 1,5°.

3. Frein à disque à garniture partielle selon les revendications 1 à 2, **caractérisé en ce que** l'angle α vaut environ 1,5° à 11°.

4. Frein à disque à garniture partielle selon la revendication 1, **caractérisée en ce qu'**au moins une surface de contact (17, 32) entre le ressort de maintien vers le bas (14) et la surface d'appui (15, 16) dans le pont de boîtier (3) présente une forme ponctuelle.

5. Frein à disque à garniture partielle selon la revendication 1, **caractérisé en ce que** la surface d'appui (15, 16) et le pont de boîtier (3) sont réalisés d'une seule pièce.

6. Frein à disque à garniture partielle selon la revendication 1, **caractérisé en ce que** la surface d'appui (15, 16) et le pont de boîtier (3) sont réalisés en plusieurs parties et la surface d'appui (15, 16) est formée par au moins une pièce rapportée (18, 19).

7. Frein à disque à garniture partielle selon la revendication 1, **caractérisé en ce que** le ressort de maintien vers le bas (14) est réalisé sous forme de ressort à fil métallique ou de ressort à lame.

8. Frein à disque à garniture partielle selon la revendication 1, **caractérisé en ce que** l'unité d'actionnement (4, 5) se base principalement sur un principe de fonctionnement hydraulique ou électromécanique.
